Europäisches Patentamt

European Patent Office

Office européen des brevets

(11) Publication number: **0 253 621 B1**

# EUROPEAN PATENT SPECIFICATION

(45) Date of publication of patent specification: **08.12.93**

(51) Int. Cl.⁵: **C08K 3/16**, C08K 5/09, C08L 77/00, B29C 67/14, C08J 5/18

(21) Application number: **87306204.6**

(22) Date of filing: **14.07.87**

The file contains technical information submitted after the application was filed and not included in this specification

(54) **Use of an oriented nylon film in the manufacture of fibrous reinforced panels.**

(30) Priority: **17.07.86 GB 8617533**

(43) Date of publication of application:
**20.01.88 Bulletin 88/03**

(45) Publication of the grant of the patent:
**08.12.93 Bulletin 93/49**

(84) Designated Contracting States:
**BE DE GB IT**

(56) References cited:
**US-A- 3 995 084**
**US-A- 4 362 585**

**WPIL, FILE SUPPLIER, abstract no. AN-85-119043, Derwent Publications Ltd, London (GB)&NUM;**

(73) Proprietor: **Du Pont Canada Inc.**
**Box 2200,**
**Streetsville Postal Station**
**Mississauga, Ontario L5M 2H3(CA)**

(72) Inventor: **Chatsick, James John**
**51 Centennial Drive**
**Port Hope, ON, L1A 3S9(CA)**
Inventor: **Sipos, Peter Andrew**
**637 Pimlico Place**
**Kingston, ON, K7M 5T7(CA)**

(74) Representative: **Ellis, John Clifford Holgate et al**
**MEWBURN ELLIS & CO.**
**2/3 Cursitor Street**
**London EC4A 1BO (GB)**

**Description**

The present invention relates to nylon film, which is useful as a carrier web in the manufacture of fibrous reinforced resin sheets.

Fibrous reinforced resin sheets, which are also known as fibre reinforced panels (FRP) and methods of manufacturing them are known. Fibrous reinforced resin sheets are generally made from a cross-linkable polymeric resin containing a particulate filler. The particulate filler is usually a cut fibre, such as glass fibre. The sheets may also contain small concentrations of additives, e.g., a cross-linking agent. A typical method of manufacture is described in U.S. Patent 4 362 585 to de Antonis et al which issued 1982 December 7, and in French Patent No. 1 249 734 to Deutsche Akadamie der Wissenschaften zu Berlin which was published 1960 November 21. Carrier webs shown to be useful in this method of manufacture include regenerated cellulose film, oriented polyester film and oriented nylon film. The top film also may be made from these materials.

In the manufacture of fibrous reinforced resin sheets, it is critical, for some applications, that such sheets have glossy surfaces. For example, if the surface of sheets intended for building greenhouses is rough, mould tends to grow on the sheets. In addition, if fibres extend from the surface, such sheets tend to have a shorter useful life than sheets which do not have fibres extending from the surface. When regenerated cellulose film is used as the web in contact with the reinforced resin sheet, during manufacture, the sheets so formed have a glossy surface which make such sheets suitable for use in greenhouses and the like. Heretofore, when oriented nylon films have been used as a carrier or top web in the manufacture of fibrous reinforced resin sheets, the resultant sheets are lacking in the necessary gloss characteristics for some applications. In order to overcome such a problem, it is common to use an additional processing treatment, known as "gel coat" in order to impart the necessary high gloss finish. Fibrous sheets made with regenerated cellulose and nylon carrier webs have been studied microscopically, and it has been found that a sheet made using an oriented nylon carrier web has fibres which stick out from the surface of the sheet, thus causing the lack of gloss.

Although not wishing to be bound by any theory, the present inventor speculates that the aforementioned problem of lack of gloss may be caused by static electricity at the interface of the oriented nylon film and the resin sheet. It has been observed that during manufacture of cast nylon films there is less static build-up on films containing a heat stabilizer than on those in which the heat stabilizer is not present.

Heat stabilizers, for use in nylon structures, are known. In general, heat stabilizers comprising cupric salts and alkali metal salts, in combination, are used commercially. They are used in nylon fibres which may be subject to heat and/or strong sunlight, e.g., seat belt yarn. In addition, they have been used in cast nylon films which are intended to be subjected to high temperatures, e.g., in the manufacture of aeroplane wings.

The present invention provides the use of an oriented nylon film containing an additive selected from at least one copper salt, at least one alkali metal salt, at least one alkaline earth metal salt and mixtures thereof, as a release sheet of a fibre-reinforced resin sheet, for yielding a glossy surface of the latter when stripped therefrom. Preferably the nylon film is nylon 6, nylon 66 or nylon 66/6 film, or a film of a mixture of nylon 6, nylon 66, and/or nylon 66/6. Especially useful is nylon 66 film. The film is preferably oriented in the machine direction.

Preferred copper salts are cupric acetate and cupric iodide, especially the former. It is preferred that the copper salt, alkali metal halide or alkaline earth metal halide be used alone, but they may be used in combination.

In an embodiment, a top web of the film is fed on top of the fibre-reinforced resin material prior to passing the resultant sandwich of carrier web, fibrous reinforced resin material and top web through constricting rollers. The carrier web may also or alternatively be of the said film.

Preferably the nylon film is made from nylon 6, nylon 66, nylon 66/6 or mixtures thereof, especially nylon 66 film. Preferably, also, the film is oriented in the machine direction.

The copper salts may be cupric or cuprous salts of an organic or an inorganic acid. Preferred organic acid salts are copper salts of acetic, butyric, lauric, palmitic and stearate acids. Preferred alkali metal and alkaline earth metal halides are the chlorides, bromides or iodides of sodium, potassium and magnesium.

The nylon film may be oriented using known methods, e.g. according to the methods shown in Canadian Patent 1 011 520 to I.K. MacGregor which issued 1977 June 7 and U.S. Patent 4 477 407 to Hetherington et al which issued 1984 October 10. Preferred orientation ratios are from 1.5:1 to 6:1.

For the manufacture of fibrous reinforced resin sheets, usually a carrier web is continuously fed onto a conveyor, past stations for feeding cross-linkable resin and particulate filler onto the carrier web, through an oven and is then wound up on a wind-up roll. The carrier web is a so-called release sheet and may be of regenerated cellulose, oriented polyester or oriented nylon film. A top web, also a release sheet, may also be fed on top of the filler and resin prior to entering the oven. Prior to entering the oven, there is means to control the thickness of the resin and filler mixture. Usually this is accomplished by the use of compacting rollers. In the present invention, at least one of the carrier web and top web is an oriented nylon film containing the aforementioned copper and/or halide salts.

The cross-linkable resin is usually a thermosetting resin, e.g. a polyester composition containing a cross-linking agent. The particulate filler is a fibrous reinforcing material, e.g. cut fibre. The usual fibrous reinforcing material is cut glass fibre. After compaction, the resin sheet is fed into an oven where cross-linking takes place. The crosslinked sheet is then removed from the oven. Usually the carrier web, and any top web is stripped from the sheet at this stage, but such webs may remain in contact with the sheet until used. The crosslinked sheet is cut into sheets of appropriate length.

The sheet formed using the present invention are useful in applications where a glossy surface is desirable.

The present invention is illustrated by the following example:

EXAMPLE 1

Six experiments were performed whereby fibrous-reinforced resin sheets were manufactured using carrier webs of regenerated cellulose film, machine-direction oriented nylon 6 or nylon 66 films (without copper salts) and nylon 66 films containing copper salts in amounts of about 12, 43, and 75 ppm Cu. The process was run at about 10m/min and the resin sheets cured at about 125°C.

The sheets produced using the regenerated cellulose film and the copper-containing nylon film carrier webs were acceptable for greenhouse glazing applications, but the sheets produced with other films were unacceptable.

EXAMPLE 2

Several experiments were performed whereby fibrous reinforced resin sheets were manufactured using carrier webs as shown in Table 1. The manufacturing processes were run at about 10 m/min and the resin sheets were cured at about 155-160°C. All of the nylon carrier

Table 1

| Run No. | Carrier Web | Additive | Gloss* |
|---|---|---|---|
| 1 | Nylon 6 | None | 3 |
| 1A | Nylon 6 | None | 3 |
| 24 | Nylon 66 | None | 3 |
| 12 | Nylon 6 | None | 7** |
| 5 | Nylon 66 | Cupric acetate (44 ppm Cu) | 8 |
| 6 | Nylon 66 | Cupric acetate (60 ppm Cu) | 8 |
| 7 | Nylon 66 | Cupric acetate (120 ppm Cu) | 9 |
| 8 | Nylon 66 | Cuprous iodide (30 ppm Cu) | 9 |
| 9 | Nylon 66 | Cuprous iodide (70 ppm Cu) | 9 |
| 10 | Nylon 66 | Cuprous iodide (135 ppm Cu) | 9 |
| 2,14-22 | Nylon 66 | Cupric acetate (25 ppm Cu)and Potassium bromide (710 ppm) | 7[1] |
| 3,23 | Nylon 66 | Cupric acetate (64 ppm Cu)and Potassium bromide (1800 ppm) | 8[1] |
| 11 | Nylon 6 | Cupric acetate (70 ppm Cu)and Potassium bromide (2000 ppm) | 7 |
| 4 | Nylon 66 | Potassium bromide (940 ppm) | 8 |
| 13 | Regenerated cellulose | --- | 7 |

\* Subjective rating, 1 to 10 (matte to high gloss)

\*\* Finished sheet was gel coated

[1] Average gloss level for all runs.

webs had a thickness of 19 micrometres, whereas the regenerated cellulose carrier web had a thickness of 215 micrometres.

For run 1, 1A and 24, examination of the sheet surface showed fibre prominence. For runs 2 to 13 and 15 to 23, no such fibre prominence was evident.

The copper salt may be present in the oriented nylon film in concentrations as small as about 10 ppm, based upon the copper concentration. Concentrations from 20 to 150 ppm Cu are particularly effective, especially from at least 50 ppm. The halides of the alkali metal or alkaline earth metal may preferably be in concentrations from about 0.05 wt %, especially from about 0.08 to 0.20 wt %.

For the manufacture of fibrous reinforced resin sheet, the oriented nylon film thickness will depend, in part on the thickness of the sheet. For so-called heavy gauge resin sheet the nylon film may be up to about 60 micrometres or greater in thickness.

## Claims

1. The use of an oriented nylon film containing an additive from at least one copper salt, at least one alkali metal salt, at least one alkaline earth metal salt or mixtures thereof as a release sheet of a fibre-reinforced resin sheet, for yielding a glossy surface of the latter when stripped therefrom.

2. A use according to claim 1 wherein the nylon is nylon 6, nylon 66, nylon 66/6 or mixtures thereof.

3. A use according to claim 1 or claim 2 wherein the nylon film is monoaxially oriented.

4. A use according to any of claims 1 to 3 wherein the additive is selected from acetates, butyrates, laurates, palmitates, stearates and iodides of copper.

5. A use according to any of claims 1 to 4 wherein the additive comprises copper salt present in a concentration of at least 10 ppm Cu.

6. A use according to claim 5 wherein the said copper salt is present in a concentration of from 20 to 150 ppm Cu.

7. A use according to any one of claims 1 to 3 wherein the additive is an alkali metal salt or alkaline earth metal salt or a mixture thereof.

8. A use according to claim 7 wherein the additive is selected from iodides, bromides and chlorides of sodium, potassium and magnesium.

9. A use according to claim 8 wherein the additive is potassium bromide.

10. A use according to claim 7, claim 8 or claim 9 wherein the additive comprises a halide of an alkali metal or of an alkaline earth metal, said halide being present in a concentration of at least 0.05 wt %.

## Patentansprüche

1. Verwendung eines orientierten Nylonfilms, der ein Additiv aus zumindest einem Kupfersalz, zumindest einem Alkalimetallsalz, zumindest einem Erdalkalimetallsalz oder Mischungen daraus enthält, als Freigabefolie einer faserverstärkten Harztafel bzw. -bahn, um eine glänzende Oberfläche der letzteren zu ergeben, wenn sie davon abgezogen wird.

2. Verwendung nach Anspruch 1, worin das Nylon Nylon 6, Nylon 66, Nylon 66/6 oder Mischungen davon ist.

3. Verwendung nach Anspruch 1 oder 2, worin der Nylonfilm monoaxial orientiert ist.

4. Verwendung nach einem der Ansprüche 1 bis 3, worin das Additiv aus Kupferacetaten, -butyraten, -lauraten, -palmitaten, -stearaten und -jodiden ausgewählt ist.

5. Verwendung nach einem der Ansprüche 1 bis 4, worin das Additiv Kupfersalz enthält, das in einer Konzentration von zumindest 10 ppm Cu vorhanden ist.

6. Verwendung nach Anspruch 5, worin das genannte Kupfersalz in einer Konzentration von 20 bis 150 ppm Cu vorhanden ist.

**7.** Verwendung nach einem der Ansprüche 1 bis 3, worin das Additiv ein Alkalimetallsalz oder Erdalkalimetallsalz oder eine Mischung daraus ist.

**8.** Verwendung nach Anspruch 7, worin das Additiv aus Jodiden, Bromiden und Chloriden von Natrium, Kalium und Magnesium ausgewählt ist.

**9.** Verwendung nach Anspruch 8, worin das Additiv Kaliumbromid ist.

**10.** Verwendung nach Anspruch 7, 8 oder 9, worin das Additiv ein Halid eines Alkalimetalls oder eines Erdalkalimetalls enthält, wobei das genannte Halid in einer Konzentration von zumindest 0,05 Gew.-% vorhanden ist.

**Revendications**

**1.** Utilisation d'une pellicule en nylon orienté contenant un additif d'au moins un sel de cuivre, au moins un sel de métal alcalin, au moins un sel de métal alcalino-terreux ou des mélanges de ceux-ci comme feuille détachable d'une feuille en résine renforcée par des fibres, pour donner une surface brillante à cette dernière quand elle en est décollée.

**2.** Utilisation selon la revendication 1 dans laquelle le nylon est du nylon 6, du nylon 66 du nylon 66/6 ou un mélange de ceux-ci.

**3.** Utilisation selon la revendication 1 ou 2 dans laquelle la pellicule en nylon est orientée monoaxialement.

**4.** Utilisation selon l'une des revendications 1 à 3 dans laquelle l'additif est sélectionné parmi des acétates, butyrates, laurates, palmitates, stéarates et iodures de cuivre.

**5.** Utilisation selon l'une des revendications 1 à 4 dans laquelle l'additif comprend un sel de cuivre présent dans une concentration d'au moins 10 ppm Cu.

**6.** Utilisation selon la revendication 5 dans laquelle ledit sel de cuivre est présent dans une concentration de 20 à 150 ppm Cu.

**7.** Utilisation selon l'une des revendications 1 à 3 dans laquelle l'additif est un sel de métal alcalin ou un sel de métal alcalino-terreux ou un mélange de ceux-ci.

**8.** Utilisation selon la revendication 7 dans laquelle l'additif est sélectionné parmi des iodures, bromures et chlorures de sodium, de potassium et de magnésium.

**9.** Utilisation selon la revendication 8 dans laquelle l'additif est du bromure de potassium.

**10.** Utilisation selon l'une des revendications 7 à 9 dans laquelle l'additif comprend un halogénure d'un métal alcalin ou d'un métal alcalino-terreux, ledit halogénure étant présent dans une concentration d'au moins 0,05% en poids.